## Europäisches Patentamt

## European Patent Office

## Office européen des brevets

(19)

(11) Veröffentlichungsnummer: **0 172 390**
**B1**

(12) **EUROPÄISCHE PATENTSCHRIFT**

(45) Veröffentlichungstag der Patentschrift:
14.12.88

(51) Int. Cl.⁴: **G 01 P 3/36**

(21) Anmeldenummer: 85108685.0

(22) Anmeldetag: 11.07.85

(54) Verfahren und Einrichtung zur Drehratenauslesung mittels eines passiven optischen Resonators.

(30) Priorität: 20.07.84 DE 3426868

(43) Veröffentlichungstag der Anmeldung:
26.02.86 Patentblatt 86/9

(45) Bekanntmachung des Hinweises auf die Patenterteilung:
14.12.88 Patentblatt 88/50

(84) Benannte Vertragsstaaten:
CH DE FR GB IT LI NL SE

(56) Entgegenhaltungen:
EP-A-0 026 066
DE-A-2 941 618
US-A-4 135 822
US-A-4 273 444
US-A-4 408 882

(73) Patentinhaber: LITEF GmbH, Lörracher Strasse 18,
D-7800 Freiburg/Br. (DE)

(72) Erfinder: Schröder, Werner, Dr. Dipl.- Phys.,
Mittelweg 22, D-7801 Umkirch (DE)
Erfinder: Handrich, Eberhard, Dr. Dipl.- Phys.,
Keltenring 104, D-7815 Kirchzarten (DE)

(74) Vertreter: Patentanwälte TER MEER - MÜLLER -
STEINMEISTER, Mauerkircherstrasse 45, D-8000
München 80 (DE)

EP 0 172 390 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren und eine Einrichtung zur Drehratenauslesung mittels eines passiven optischen Resonators, bei dem ein aus einer kohärenten Lichtquelle stammender Lichtstrahl in mehrere Teillichtstrahlen aufgespalten wird, die in entgegengesetzter Richtung in einen Ringresonator eingestrahlt werden, der aktiv auf die Lichtquelle und/oder auf den die Lichtquelle aktiv abgestimmt wird, und bei welchem Verfahren die Differenzfrequenz der beiden Teillichtstrahlen als Maß für die Drehrate ausgewertet wird.

Neben dem aktiven Resonator (Laserkreisel) und dem Sagnac-Interferometer eignet sich der passive Resonator zur Drehratenmessung auf optischem Wege unter Ausnutzung des Sagnac-Effekts (G. Sagnac: C.R. Acad. Sci. Paris, 95, 708 (1913)).

Vor annähernd 10 Jahren untersuchten S. Ezekiel und S.R. Balsamo am Massachusetts Institute of Technology (USA) den passiven Ringresonator auf seine Eignung als Drehratensensor. Eine erste grundlegende technische Lösung ist in der US-PS 4 135 822 beschrieben. Erste experimentelle Ergebnisse wurden kurze Zeit später veröffentlicht (Appl. Phys. Lett. 30, 478 (1977)). Stetige Weiterentwicklung des Experimentalmodells führte zu einem Drehratensensor mit inertialer Genauigkeit unter Laborbedingungen (Opt. Lett. 6, 569 (1981)).

Wenngleich die Resonatoren der Experimentalmodelle in Spiegeltechnik ausgeführt waren, so wurde schon frühzeitig (vgl. US-PS 4 135 822) die Möglichkeit eines Faserresonators für zukünftige Entwicklungen in Betracht gezogen. Eine Ausführung in Fasertechnik scheiterte jedoch zunächst an den technischen Möglichkeiten. Mit Hilfe eines kommerziellen Kopplers hoher Güte wurde aber kürzlich ein Resonator gebaut, mit dem erfolgreiche Messungen durchgeführt wurden (R.E. Meyer et al.: Passive Fiberoptic Ring Resonator for Rotation Sensing, Preprint MIT 1983).

Parallellaufende Forschungsarbeiten in USA, insbesondere am E.L. Ginzton Labor der Stanford University in Kalifornien führten zur Entwicklung eines verlustarmen Faserrichtkopplers (Electron. Lett. 16, 260 (1980)). Mit Kopplern dieses Typs gelang es, Resonatoren mit einer Finesse von 60 - 90 herzustellen (vgl. L.F. Stokes et al.: Opt. Lett. 7, 288 (1982)). Experimentelle Untersuchungen bezüglich der Eignung als Drehratensensor wurden vor kurzem bekannt (vgl. G.L. Report Nr. 3620, E.L. Ginzton Lab, Stanford University, September 1983).

Bekannt wurden auch Entwicklungen von passiven Resonatoren in integrierter Optik (vgl. US-PS 4 326 803 und Firmenschrift: A. Lawrence, "The Micro-Optic Gyro", NORTHROP Precision Products Division, August 1983).

Die Ausführung des Resonators in Spiegeltechnik für einen Drehratensensor hat den Nachteil, daß das strenge Einhalten des axialen $\text{TEM}_{oo}$-Modes im Resonator unter ungünstigen Umweltbedingungen schwierig ist. Bei einer Faserausführung des Resonators hingegen besteht gegenüber einem Sagnac-Interferometer wegen der wesentlich kürzeren notwendigen Faserlänge zwar der Vorteil einer geringeren Temperaturgradientenempfindlichkeit (vgl. D.M. Shupe: Appl. Opt. 20, 286 (1981)). Ein solcher Faserring kann jedoch zwei Eigenzustände der Polarisation tragen (vgl. B. Lamouroux et al.: Opt. Lett. 7, 391 (1982)). Die Kopplung dieser beiden Zustände durch Umwelteinflüsse führt zu zusätzlichem Rauschen im Ausgangskanal.

Des weiteren werden bisher nur Single-Mode He-Ne-Laser als Lichtquellen verwendet. Die dabei auftretende Rückstreuung im Faserresonator ist eine wesentliche Ursache für die das Nutzsignal störenden Interferenzen. Die Verwendung einer oder mehrerer längerwelliger kohärenter Lichtquellen führt theoretisch zu einer Verbesserung in dieser Hinsicht, da die Rayleighrückstreuung der vierten Potenz der Lichtwellenlänge umgekehrt proportional ist. Bisher jedoch scheiterte die naheliegende Verwendung eines längerwelligen Halbleiterlasers an seiner für einen guten Faserresonator zu großen spektralen Breite. Eine bedeutende Verringerung der spektralen Breite eines Halbleiterlasers läßt sich durch Verwendung eines externen Resonators erzielen (S. Saito und Y. Yamamoto: Electr. Lett. 17, 325 (1981); M.W. Fleming und A. Mooradian: IEEE J. Quant. Electr. QE-17, 44 (1981)). Eine solche Lichtquelle kann durch Hinzufügen eines oder mehrerer dispersiver Elemente, Gitter und/oder Spiegel zum Halbleiterlaser oder durch Beschichten des Halbleiterlasers direkt erzielt werden, derart, daß die Güte des optischen Resonators erhöht wird. Es besteht auch die Möglichkeit einer Ausführung des externen Resonators in Fasertechnik (IEEE Transactions on Microwave Theory and Techniques, MTT-30, No. 10, 1700 (1982)).

Das Problem des Auftretens unerwünschter niederfrequenter Interferenzen im Nutzsignal aufgrund der Mischung einer Signalwelle mit dem rückgestreuten Anteil der gegenläufigen Welle tritt immer dann auf, wenn die beiden gegenläufigen Lichtwellen den gleichen longitudinalen Resonatormode besetzen. Eine bekannte Möglichkeit der Abhilfe ist die zusätzliche Phasenmodulation im zuführenden Lichtweg zum Resonator (Sanders et al.: Opt. Lett. 6, 569 (1981)).

Die Besetzung zweier verschiedener longitudinaler Moden durch die gegenläufigen Lichtwellen bringt zwar die Interferenzfrequenzen in einen so hohen Frequenzbereich, daß sie nicht mehr störend in Erscheinung treten, führt aber zu einer außerordentlich hohen temperaturabhängigen Nullpunktdrift, da sich durch eine Temperaturänderung die optische Länge des Resonators und damit der Modenabstand verändern. Dies sei an einem Beispiel erläutert:

Der Modenabstand $\Delta v$ eines Ringresonators mit einer Länge L = 10 m und einem effektiven Brechungsindex von n = 1,46 ist:

$$\Delta v = \frac{c}{n \cdot L} \cong 20,5 \text{ MHz} \qquad (1)$$

Besteht die Faser des Ringresonators aus Quarz, so wird die optische Wellenlängenänderung bei Temperaturwechsel im wesentlichen durch die relative Änderung des Brechungsindex von etwa $1 \times 10^{-5}/°C$ bestimmt. Daraus ergibt sich eine temperaturabhängige Drift des Modenabstands von

$$\frac{d\Delta v}{dT} = -\frac{c}{n \cdot L} \times \frac{1}{n} \times \frac{dn}{dT} \cong 140 \text{ Hz}/°C \qquad (2)$$

Wird die Drehrate aus dem Frequenzabstand der beiden in verschiedenen longitudinalen Moden gegenläufigen Lichtwellen ermittelt, so führt diese temperaturabhängige Frequenzabstandsänderung zu einer Nullpunktdrift der Drehrate über die bekannte Sagnac-Beziehung

$$\Omega = \frac{P \cdot \lambda}{4F} \times \Delta vs \qquad (3)$$

(P: Umfang des Resonators, $\lambda$: Lichtwellenlänge, F: umfangene Fläche, $\Delta vs$: Frequenzunterschied gegenläufiger Lichtwellen durch den Sagnac-Effekt).

Im Beispiel ergibt sich damit für einen kreisförmigen Resonator mit einem Durchmesser von 18 cm und einer Wellenlänge von 0,83 µm eine unakzeptable Nullpunktdrift von 132°/h/°C.

Der Erfindung liegt damit die Aufgabe zugrunde, ein Verfahren und eine Einrichtung zur Drehratenauslesung mittels eines passiven optischen Resonators zu schaffen, bei dem die Temperaturdrift der Drehrate vermieden ist. Außerdem soll das bei bisher bekannten passiven optischen Resonatoren auftretende Rauschen im Ausgangssignal und störende Interferenzen aufgrund der Rayleighrückstreuung im Faserresonator weitgehend vermieden werden.

Die erfindungsgemäße Lösung ist verfahrensmäßig im Patentanspruch 1 angegeben, während eine die angegebene Aufgabenstellung lösende erfindungsgemäße technische Einrichtung die im Patentanspruch 3 angegebenen Merkmale aufweist.

Vorteilhafte Weiterbildungen des Erfindungsgedankens sind in abhängigen Patentansprüchen angegeben.

Erfindungsgemäß wird das Problem der Temperaturdrift der Drehrate dadurch gelöst, daß durch die Verwendung von mindestens drei frequenzverschiedenen Lichtstrahlen, die gleichzeitig oder wechselweise in den Resonator eingestrahlt und abgestimmt werden, sowohl eine drehratenabhängige als auch eine temperaturabhängige Information durch Verrechnung der Differenzfrequenzen der abgestimmten Frequenzen der Lichtstrahlen erhalten werden und damit eine Eliminierung der temperaturabhängigen Drift erreicht wird. Gleichzeitig wird eine genaue Temperaturinformation gewonnen, die zu einer Temperaturmodellierung des Drehratensensors (Skalenfaktor, Nullpunktdrift etc.) herangezogen werden kann.

In bevorzugter Ausführungsform wird für den Ringresonator eine doppelbrechende, polarisationserhaltende Monomodefaser oder eine polarisierende Lichtleitfaser verwendet. Zusätzlich kann ein Polarisator im Faserring verwendet werden zur Unterdrückung des nicht gewünschten Polarisationszustands.

Ein besonders einfacher Aufbau für den erfindungsgemäßen Drehratensensor ergibt sich, wenn zur Erzeugung der gegenüber der kohärenten Lichtquelle frequenzverschobenen Teillichtstrahlen ein einziger im Raman-Nath-Gebiet arbeitender akustooptischer Modulator verwendet wird und das niederfrequente Umschalten zwischen den beiden frequenzverschobenen Lichtstrahlen durch elektromagnetisch oder piezoelektrisch gesteuerte Klappen oder Blenden erfolgt.

Die Erfindung und vorteilhafte Einzelheiten werden nachfolgend unter Bezug auf die Zeichnung in beispielsweisen Ausführungsformen näher erläutert. Es zeigen:

Fig. 1    das Grundprinzip einer ersten Ausführungsform eines Drehratensensors mit erfindungsgemäßen Merkmalen;

Fig. 2    ein Frequenzdiagramm zur Erläuterung des der Erfindung zugrundeliegenden Prinzips;

Fig. 3    eine andere vorteilhafte Ausführungsform der Erfindung; und

Fig. 4    eine der Lösung nach Fig. 1 entsprechende konkrete und realisierte Ausführungsform der Erfindung, jedoch mit einer gegenüber Fig. 1 abgewandelten Frequenznachstimmung.

Einander entsprechende, im Prinzip gleich wirkende Baugruppen und Teile sind in den einzelnen Figuren mit den gleichen Bezugshinweisen gekennzeichnet, obgleich sich in der konkreten Ausführung unterschiedliche Gestaltungen und Dimensionierungen ergeben können.

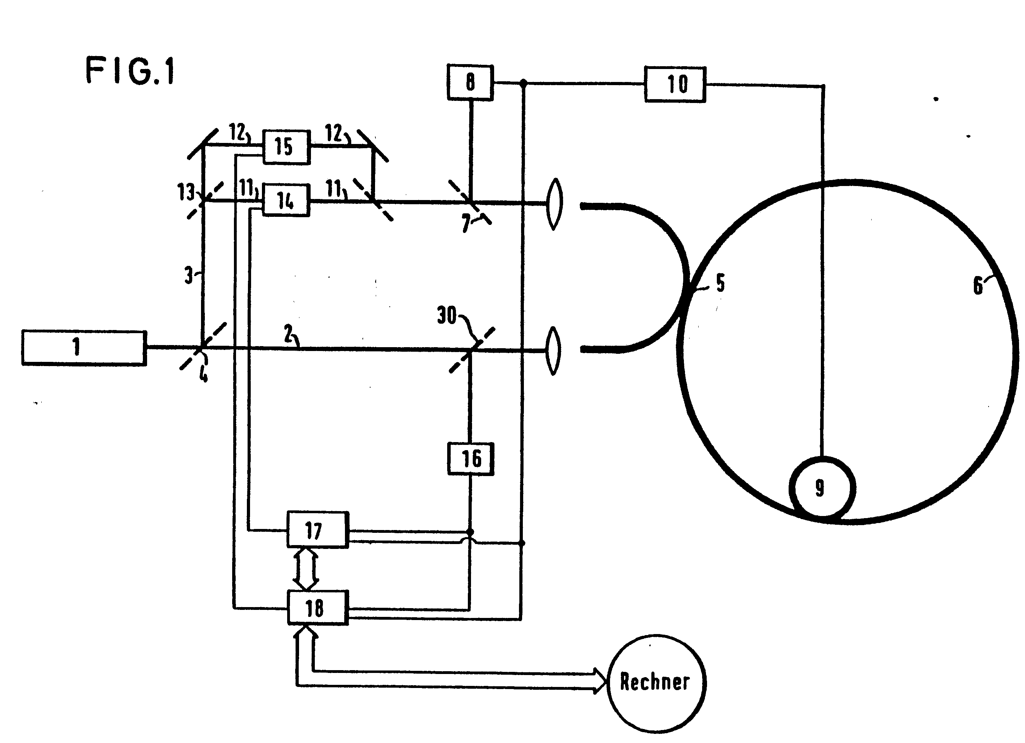

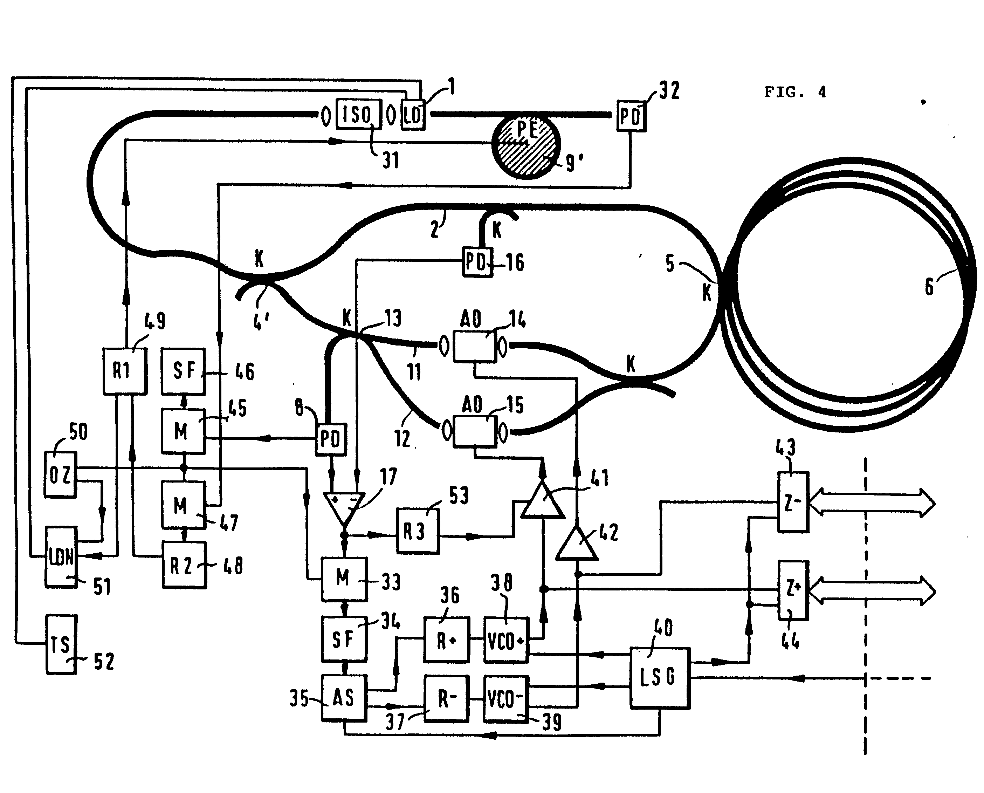

Bei der Ausführungsform nach Fig. 1 wird das Licht eines Lasers 1 genügend hoher Kohärenz in zwei Teillichtstrahlen 2 und 3 mit Hilfe eines Strahlteilers 4 aufgespalten. Der Teilstrahl 2 wird direkt über einen Faserrichtkoppler 5 in einen Faser-Ringresonator 6 eingestrahlt. Das nach Durchlaufen des Ringresonators 6 über den Richtkoppler 5 ausgekoppelte Licht gelangt über einen Strahlteiler 7 auf einen Detektor 8. Die Frequenzabstimmung kann durch eine optische Längenänderung des Resonators 6, beispielsweise mittels eines Piezoelements 9 (Fig. 1) oder durch Frequenzänderung der Lichtquelle 1 mittels eines Phaseneinstellers 9' (Fig. 4) erfolgen. Eine laufende Abstimmung wird über eine Regelschleife erzielt (Detektor 8 →

Regelelektronik 10 → Piezoelement 9). Die Regelinformation kann über ein Phasen- oder Frequenzmodulationsverfahren gewonnen werden; ein Beispiel dafür wird weiter unten unter Bezug auf die Fig. 4 erläutert.

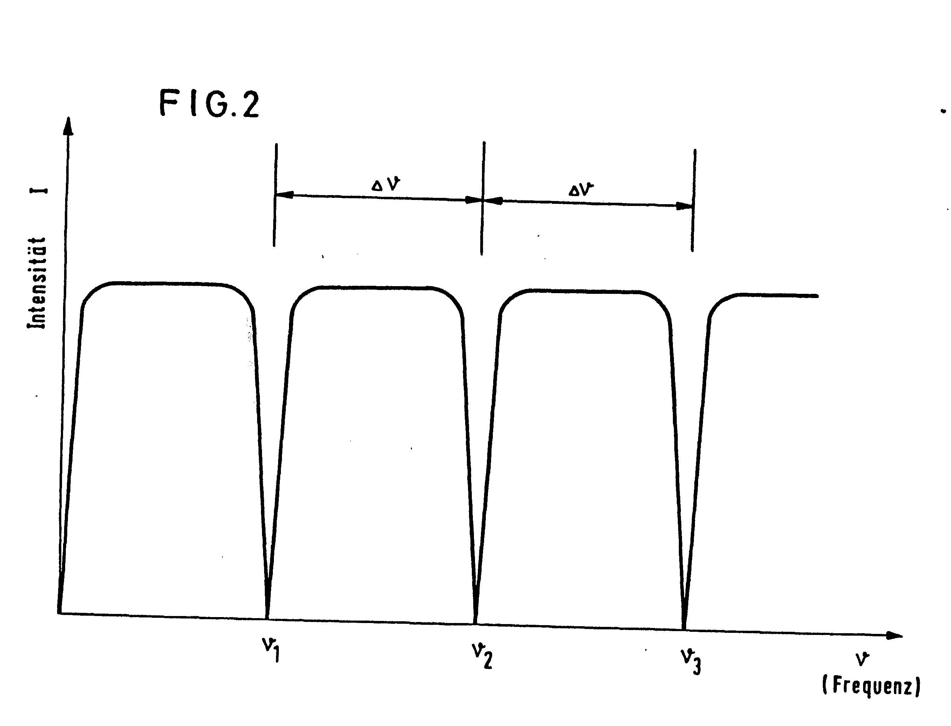

Das Licht der Lichtquelle 1 möge auf den Resonatormode $v_2$ abgestimmt sein (vgl. Fig. 2).

Der Teilstrahl 3 wird selbst in zwei Teilstrahlen 11 und 12 mit einem Strahlteiler 13 aufgeteilt, die in zwei frequenzverschiebende Elemente, insbesondere in zwei Bragg-Zellen 14 und 15 eingestrahlt werden. Die Bragg-Zellen verschieben die Lichtfrequenz derart, daß das Licht von Teilstrahl 11 auf den Resonatormode $v_1$ abgestimmt werden kann und das Licht von Teilstrahl 12 auf den Resonatormode $v_3$ (vgl. Fig. 2). Die Teilstrahlen 11 und 12 werden in schneller Folge wechselweise, beispielsweise durch wechselweises Einschalten der Hochfrequenz für die Bragg-Zellen, zum Teilstrahl 2 gegensinnig in den Ringresonator 6 eingestrahlt. (Zur Umschaltfrequenz für die Hochfrequenz der Bragg-Zellen werden weiter unten noch nähere Ausführungen gegeben.)

Das über den Richtkoppler 5 ausgekoppelte Licht der beiden frequenzverschobenen Teillichtstrahlen 11 und 12 gelangt über einen Strahlteiler 30 auf einen Photodetektor 16. Über Regelschleifen (Detektor 16 → Regelelektronik 17 → Bragg-Zellen 14, 15) werden die beiden Teilstrahlen 11 und 12 auf ihre jeweiligen Resonanzen durch Änderung der Hochfrequenz der Bragg-Zellen 14, 15 in zum Teilstrahl 2 analoger Weise abgestimmt.

Um den Einfluß schneller Frequenzvariationen der Lichtquelle beispielsweise durch Laser-Jitter, akustisches Rauschen in der Phase etc. auf die Regelung der Frequenz der Teilstrahlen 11 und 12 zu vermindern, wenn die Variationsfrequenz oberhalb der Grenzfrequenz für die $v_2$-Regelung liegt, kann ein Differenzverfahren verwendet werden, wie es beispielsweise von Sanders et al. beschrieben wurde (vgl. Opt. Lett. 6, 569 (1981)).

Für höhere Genauigkeit kann es erforderlich sein, die Intensität der Teilstrahlen 11 und 12 zu regeln, beispielsweise über die HF-Leistung der Bragg-Zellen 14 und 15, um einerseits das erfindungsgemäße Kompensationsverfahren effizient zu machen und andererseits auch noch Nullpunktdrifts aufgrund des Kerr-Effekts zu kompensieren (vgl. Ezekiel et al.: Opt. Lett. 7, 457 (1982)).

Das der Erfindung zugrundeliegende Kompensationsprinzip wird nachfolgend näher erläutert:

Bei einer Drehung des Drehraten-Sensoraufbaus verschiebt sich die Resonanzfrequenz $v_2$ durch den Sagnac-Effekt beispielsweise zu niedrigeren Frequenzen hin; hingegen erhöhen sich die Frequenzen $v_1$ und $v_3$ ebenfalls wegen des Sagnac-Effekts.

Die jeweilige Verschiebung der Resonanzfrequenz durch den Sagnac-Effekt sei $\Delta vs/2$. Dann gilt:

$$v_3 - v_2 = l \cdot \Delta v + \Delta vs \qquad (4)$$

$$v_2 - v_1 = k \cdot \Delta v - \Delta vs \qquad (5)$$

Dabei sind k und l die Differenz der Ordnungszahlen der Longitudinalmoden der Frequenzen $v_1$ und $v_3$ zu der von $v_2$.

Die Differenz ergibt

$$k \cdot (v_3 - v_2) - l(v_2 - v_1) = (k+l) \Delta vs \qquad (6)$$

und liefert ein Maß für die Drehrate über Beziehung (3).

Für speziell k = l = 1 ergibt sich

$$(v_3 - v_2) - (v_2 - v_1) = 2\Delta vs \qquad (7)$$

Die Bildung der Differenz der beiden Hochfrequenzen der Bragg-Zellen 14 und 15 bei Abstimmung auf den Resonator liefert dann also gerade die doppelte Sagnac-Frequenzverschiebung. Die temperaturabhängige optische Weglängenänderung äußert sich im wesentlichen nur noch im Skalenfaktor.

Die Umschaltfrequenz sollte ausreichend hoch sein, um nur kleine vernachlässigbare Temperaturänderungen während einer Meßperiode zu erhalten. Wird beispielsweise eine Temperaturänderungsrate von $10^{-1}°$C/sec angenommen, so ergibt sich eine Frequenzdrift für $\Delta v$ von 14 Hz/sec. Daraus läßt sich eine Umschaltfrequenz von etwa 100 Hz ableiten.

Die Summe der Frequenzen

$$(v_3 - v_2) + (v_2 - v_1) = (k + l) \cdot \Delta v \qquad (8)$$

liefert den Modenfrequenzabstand und damit ein sehr genaues Maß für die Temperatur des Ringresonators, so daß dadurch die restlichen Temperaturfehler des Resonators kompensiert werden können, vor allem die Abhängigkeit des Skalenfaktors für die Drehrate durch Veränderung des optischen Wegs des Resonators.

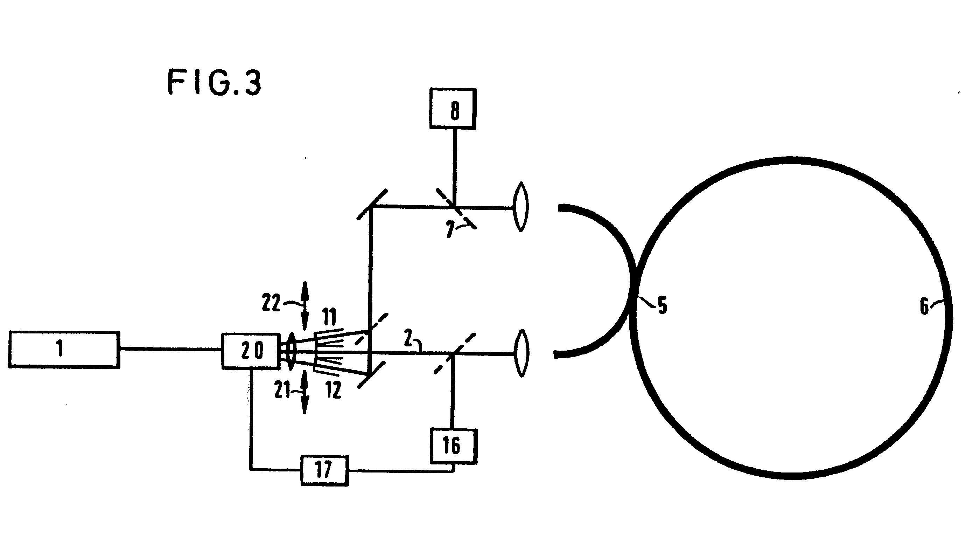

Die Fig. 3 zeigt einen besonders einfachen optischen Aufbau, bei dem die in Fig. 1 gezeigten Bragg-Zellen 14 und 15 durch nur einen akustooptischen Modulator 20 ersetzt sind, der im Raman-Nath-Gebiet arbeitet und nur einen Regler 17 verwendet. Das Umschalten zwischen den Lichtstrahlen 11 und 12 kann z. B. durch elektromagnetisch oder piezoelektrisch gesteuerte Klappen 21, 22 oder Blenden erfolgen, wobei beispielsweise eine Blendenanordnung auf einem piezoelektrischen Doppelschichtelement (Bimorph-Schalter) befestigt ist.

Eine andere Lösung besteht in der Verwendung nur eines Modulators mit zwei gegenüberliegenden akustischen Erregern, die dann entsprechend den beiden Bragg-Zellen in Fig. 1 betrieben werden.

Eine weitere Möglichkeit bietet der Einsatz einer einzelnen Bragg-Zelle, getrieben von zwei Frequenzen, die so verschieden sind, daß die zugehörigen Lichtstrahlen geometrisch getrennt werden können, indem der Unterschied in der Ablenkung der beiden Strahlen größer als die Winkeldivergenz der Einzelstrahlen ist.

Beim wechselweisen Betrieb der Teilstrahlen 11 und 12 ist in der Auswerteschaltung zur genügend genauen Messung der jeweiligen Abstimmfrequenz ein Frequenznormal erforderlich. Dies läßt sich jedoch vermeiden, wenn die Teilstrahlen 11 und 12 gleichzeitig in den Ringresonator 6 eingestrahlt werden, aber mit verschiedenen Frequenzen phasen- bzw. frequenzmoduliert werden, so daß die jeweiligen Regelschleifen mit entsprechenden Filtern bestückt eine getrennte Abstimmung ermöglichen. Dabei sollte für diesen Fall vermieden werden, daß Mischfrequenzen der Teilstrahlen 11 und 12 in der Nähe der Frequenz des Teilstrahls 2 liegen, um niederfrequente Interferenzen über die Rayleighrückstreuung zu vermeiden. Die Berechnung der Drehrate erfolgt dann bei anderer longitudinaler Modenzuordnung nach Beziehung (6).

Die Fig. 4 zeigt eine vollständige und konkret erprobte Anordnung einer erfindungsgemäßen Einrichtung zur Drehratenauslesung, bei der die aus Fig. 1 bekannten und oben erläuterten Baugruppen mit den dort verwendeten Bezugshinweisen angegeben sind. Anstelle der in Fig. 1 nur schematisch angegebenen Strahlteiler werden bei der Anordnung nach Fig. 4 durchgängig mit dem Buchstaben k gekennzeichnete Faserrichtkopplerelemente verwendet.

Die Abstimmung der durch eine Laserdiode 1 gebildeten kohärenten Lichtquelle mit nachgeschaltetem optischem Isolator 31 auf die Resonanzfrequenz des Resonators 6 erfolgt durch Frequenzänderung des aus einer Lichtleitfaser bestehenden Fabry-Perot-Resonators mittels eines Phasenschiebers 9'. Ein Regelkreis, bestehend aus Photodioden 32, Mischer 47, Regler 48 und Laserdiodennetzteil 51 sorgt zusammen mit einer Temperaturstabilisierung 52 für einen konstanten Modulationshub der mit dem Oszillator 50 modulierten Lichtquelle. Die Abstimmung der Ausgangsfrequenz der Lichtquelle 1 auf den Resonator 6 wird über Photodioden 8 und nachfolgendem Regelkreis 45, 46, 49 und 9' vorgenommen. Die so auf ein Minimum abgestimmte Intensität des im Gegenuhrzeigersinn laufenden Lichtstrahls 2 wird am Differenzverstärker 17 mit den durch akustooptische Modulatoren 14, 15 frequenzverschobenen, mit Photodiode 16 detektierten Lichtstrahlen 11, 12 verglichen. Das entmischte und gefilterte Ausgangssignal 33, 34, 35 des Differenzverstärkers 17 wird über Regler 36, VCO 38 (spannungsgesteuerter Oszillator) und Verstärker 41 (Lichtstrahl 12) bzw. Regler 37, VCO 39 (spannungsgesteuerter Oszillator) und Verstärker 42 (Lichtstrahl 11) zur Frequenznachstimmung der im Uhrzeigersinn verlaufenden Lichtstrahlen herangezogen; die Lichtintensität wird mittels Regler 53 nachgeregelt. Der vom Rechner synchronisierte Signalgenerator 40 sorgt für die wechselseitige Einkopplung der beiden Lichtstrahlen 11 und 12 in den Ring und gibt Gate-Signale an die Zähler 43 bzw. 44 ab, deren Ausgangssignale vom Rechner ausgelesen werden.

Die wesentlichen Vorteile des erfindungsgemäßen Drehraten-Ausleseverfahrens lassen sich wie folgt zusammenfassen:

- Vermeidung von störenden niederfrequenten Interferenzen durch Rückstreueffekte, wie z. B. die Rayleighrückstreuung.
- Digitale Ausgangsdaten stehen unmittelbar zur Verfügung und gewährleisten einen Meßbereich großer Dynamik. Die obere Drehratenbegrenzung ist lediglich durch den Modenabstand bzw. die Bandbreite der frequenzverschiebenden Elemente (Bragg-Zellen) bestimmt.
- Die Temperaturdrift der Drehrate ist kompensiert;
- eine genaue, gemittelte Resonatortemperaturinformation liegt vor zur Temperaturmodulierung von Skalenfaktor, Nullpunktdrift etc.

**Patentansprüche**

1. Verfahren zur Drehratenauslesung mittels eines passiven optischen Resonators, bei dem ein aus einer kohärenten Lichtquelle stammender Lichtstrahl in mehrere Teillichtstrahlen aufgespalten wird, die in entgegengesetzter Richtung in einen Ringresonator eingestrahlt werden, der aktiv auf die Lichtquelle und/oder auf den die Lichtquelle aktiv abgestimmt wird, und bei welchem Verfahren die Differenzfrequenz der beiden Teillichtstrahlen als Maß für die Drehrate ausgewertet wird, dadurch gekennzeichnet, daß

- drei Teillichtstrahlen erzeugt werden, die je für sich auf einen anderen Resonatormode abgestimmt werden, von denen der eine Teillichtstrahl entgegengesetzt zu den beiden anderen Teillichtstrahlen in den Resonator eingestrahlt wird,
- die Differenzfrequenzen zwischen dem einen und den beiden anderen Teillichtstrahlen gebildet werden, und
- die beiden Differenzfrequenzen multipliziert mit Faktoren, die der Differenz der Ordnungszahlen der jeweiligen Resonatormoden entsprechen, voneinander abgezogen und zur Bestimmung der Drehrate ausgewertet werden.

2. Verfahren nach Anspruch 1, dadurch gekennzeichnet, daß zur Bestimmung der optischen Länge des Resonators und damit der Temperatur und des Skalenfaktors der Drehratenmessung die Differenzergebnisse gewichtet summiert werden.

3. Einrichtung zur Drehratenauslesung mittels eines passiven optischen Resonators, bei dem ein aus einer kohärenten Lichtquelle (1) stammender Lichtstrahl in mehrere Teillichtstrahlen aufgespalten wird, die in entgegengesetzter Richtung in einen Faserringresonator (6) eingestrahlt werden, der aktiv auf die Lichtquelle und/oder auf den aktiv die Lichtquelle abgestimmt wird, und bei dem einer der Teillichtstrahlen mittels eines frequenzverschiebenden Elements (14; 20) auf die Resonanzfrequenz des Resonators (6) abgestimmt wird,sowie mit einer elektronischen Auswerteschaltung, welche die Differenzfrequenz der entgegengesetzt im Ringresonator (6) umlaufenden Teillichtstrahlen als Maß für die Drehrate auswertet, gekennzeichnet durch

- eine Strahlteilereinrichtung (4, 13; 20), welche den aus der Lichtquelle (1) stammenden Lichtstrahl in drei Teillichtstrahlen (2, 11, 12) aufteilt, von denen der eine (2) unverändert über einen Lichtkoppler (5) in einer Richtung in den Ringresonator (6) eingestrahlt wird, während die beiden anderen Teillichtstrahlen (11, 12) je für sich durch eine geregelte frequenzverschiebende Einrichtung (14, 15; 20) auf einen anderen Mode des Ringresonators (6) abgestimmt und über den Lichtkoppler (5) in Gegenrichtung in den Ringresonator (6) eingestrahlt werden;

- zwei Photodetektoren (8, 16), von denen der eine (8) den über den Lichtkoppler (5) am Ringresonator (6) auskoppelbaren unveränderten Teillichtstrahl aufnimmt und der andere von den beiden anderen frequenzverschobenen und ebenfalls am Ringresonator (6) auskoppelbaren Teillichtstrahlen beaufschlagt wird;

- eine Differenzbildungs- und Regelschaltung (17, 18), welche die Ausgangssignale ($v_2$ bzw. $v_3$, $v_1$) der Photodetektoren (8, 16) subtrahiert und die Frequenzen regelt, und durch

- eine Auswerteschaltung, welche eine Differenz der beiden mit Faktoren, die der Differenz der Ordnungszahlen der jeweiligen Resonatormoden entsprechen, multiplizierten Differenzfrequenzen bildet und zur Bestimmung der Drehrate auswertet.

4. Einrichtung nach Anspruch 3, dadurch gekennzeichnet, daß der Ringresonator (6) ein Faserring aus stark doppelbrechender, polarisationserhaltender Monomodefaser ist.

5. Einrichtung nach Anspruch 3, dadurch gekennzeichnet, daß der Ringresonator (6) ein Faserring aus polarisierender Lichtleitfaser ist.

6. Einrichtung nach Anspruch 3, dadurch gekennzeichnet, daß der Ringresonator (6) ein Faserring mit einem Polarisator ist.

7. Einrichtung nach Anspruch 3, dadurch gekennzeichnet, daß der Ringresonator (6) ein Resonator aus drei oder vier Spiegeln ist.

8. Einrichtung nach Anspruch 3, dadurch gekennzeichnet, daß Ringresonator (6), Modulatoren und Koppler in integrierter Optik aufgebaut sind.

9. Einrichtung nach einem der vorstehenden Ansprüche 3 bis 8, dadurch gekennzeichnet, daß die geregelte frequenzverschiebende Einrichtung aus zwei Bragg-Zellen (14, 15) besteht.

10. Einrichtung nach einem der vorstehenden Ansprüche 3 bis 8, dadurch gekennzeichnet, daß die geregelte frequenzverschiebende Einrichtung ein akustooptischer Modulator mit zwei akustischen Erregern ist.

11. Einrichtung nach einem der vorstehenden Ansprüche 3 bis 8, dadurch gekennzeichnet, daß die geregelte frequenzverschiebende Einrichtung eine einzelne Bragg-Zelle mit unterschiedlichen Frequenzansteuerungen ist.

12. Einrichtung nach einem der vorstehenden Ansprüche 3 bis 8, dadurch gekennzeichnet, daß die Strahlteilereinrichtung und die geregelte frequenzverschiebende Einrichtung aus einem im Raman-Nath-Gebiet arbeitenden akustooptischen Modulator bestehen.

13. Einrichtung nach einem der vorstehenden Ansprüche 3 bis 11, dadurch gekennzeichnet, daß die verschobenen Frequenzen alternativ wechselnd durch Anlegen entsprechender Frequenzen an die geregelte frequenzverschiebende Einrichtung in den Resonator einstrahlbar sind.

14. Einrichtung nach einem der vorstehenden Ansprüche 3 bis 12, dadurch gekennzeichnet, daß die verschobenen Frequenzen alternativ wechselnd durch über elektromagnetisch oder piezoelektrisch steuerbare Blenden (21, 22) in den Resonator einstrahlbar sind.

15. Einrichtung nach einem der vorstehenden Ansprüche 3 bis 12, dadurch gekennzeichnet, daß die verschobenen Frequenzen kontinuierlich in den Resonator einstrahlbar sind, aber zusätzlich verschieden moduliert und nach dem Photodetektor (16) durch entsprechende Filterung wieder trennbar sind.

**Claims**

1. Method for reading out rates of rotation by means of a passive optical resonator, in which method a light beam originating from a coherent light source is split into several component light beams which are radiated in opposite direction into a ring resonator which is actively tuned to the light source and/or to which the light source is actively tuned, and in which method the differential frequency of the two component light beams is evaluated as a measure of the rate of rotation,
characterised in that

- three component light beams are generated which are each individually tuned to a different resonator mode, one component light beam of which is radiated into the resonator in the opposite direction to the other two component light beams,

- the differential frequencies are formed between one and the two other component light beams, and

- the two differential frequencies, multiplied by factors corresponding to the mode numbers of the respective resonator modes, are weighted and subtracted from each other and are evaluated for determining the rate of rotation.

2. Method according Claim 1, characterised in that for determining the optical length of the resonator and thus the temperature and the scale factor of the rate-of-rotation measurement, the differential results, weighted, are summed.

3. Device for reading out rates of rotation by means of a passive optical resonator, in which device a light beam originating from a coherent light source (1) is split into several component light beams which are radiated in the opposite direction into a fibre ring resonator (6) which is actively tuned to the light source and/or to which the light source is actively tuned, and in which one of the component light beams is tuned to the resonant frequency of the resonator (6) by means of a frequency - shifting element (14; 20), and comprising an electronic evaluating circuit which evaluates the differencial frequency of the component light beams circulating in opposite directions in the ring resonator (6) as a measure for the rate of rotation, characterised by
- a beam divider device (4, 13; 20) which divides the light beam originating from the light source (1) into three component light beams (2, 11, 12), one (2) of which is radiated unchanged via a light coupler (5) in one direction into the ring resonator (6) whilst the two other component light beams (11, 12) are each individually tuned by a controlled frequency-shifting device (14, 15; 20) to another mode of the ring resonator (6) and are radiated via the light coupler (5) in the opposite direction into the ring resonator (6);
- two photo detectors (8, 16), one (8) of which accepts the unchanged component light beam which can be coupled out via the light coupler (5) at the ring resonator (6) and the other one has applied to it the two other frequency-shifted component light beams which can also be coupled out at the ring resonator (6);
- a difference-forming and control circuit (17, 18) which subtracts the output signals ($v_2$ and $v_3$, $v_1$) of the photo detectors (8, 16) and controls the frequencies, and by
- an evaluating circuit which forms a difference of the two differential frequencies, which are multiplied by factors corresponding to the difference of the mode numbers of the respective resonator modes and evaluates this difference for determining the rate of rotation.

4. Device according to Claim 3, characterised in that the ring resonator (6) is a fibre ring of strongly birefringent, polarisation-maintaining monomode fibre.

5. Device according to Claim 3, characterised in that the ring resonator (6) is a fibre ring of polarising light-conducting fibre.

6. Device according to Claim 3, characterised in that the ring resonator (6) is a fibre ring provided with a polariser.

7. Device according to Claim 3, characterised in that the ring resonator (6) is a resonator consisting of three or four mirrors.

8. Device according to Claim 3, characterised in that the ring resonator (6), modulators and coupler are constructed in integrated optics.

9. Device according to one of the preceding Claims 3 to 8, characterised in that the controlled frequencyshifting device consists of two Bragg cells (14, 15).

10. Device according to one of the preceding Claims 3 to 8, characterised in that the controlled frequencyshifting device is an acousto-optical modulator comprising two acoustical exciters.

11. Device according to one of the preceding Claims 3 to 8, characterised in that the controlled frequencyshifting device is a single Bragg cell having different frequency-drive arrangements.

12. Device according to one of the preceding Claims 3 to 8, characterised in that the beam divider device and the controlled frequency-shifting device consist of an acousto-optical modulator operating in the Raman-Nath region.

13. Device according to one of the preceding Claims 3 to 11, characterised in that the shifted frequencies can be radiated in alternately alternating manner into the resonator by applying appropriate frequencies to the controlled frequency-shifting device.

14. Device according to one of the preceding Claims 3 to 12, characterised in that the shifted frequencies can be radiated in alternately alternating manner into the resonator by diaphragms (21, 22) which can be electromagnetically or piezoelectrically controlled.

15. Device according to one of the preceding Claims 3 to 12, characterised in that the shifted frequencies can be continuously radiated into the resonator but are additionally differently modulated and can be separated again after the photo detector (16) by appropriate filtering.

**Revendications**

1. Procédé de mesure de la vitesse angulaire à l'aide d'un résonateur optique passif, dans lequel un faisceau lumineux provenant d'une source de lumière cohérente est subdivisé en plusieurs faisceaux lumineux partiels qui sont dirigés en sens inverse sur un résonateur annulaire qui est accordé de façon active sur la source de lumière et/ou sur lequel la source de lumière est accordée de façon active, procédé dans lequel la fréquence différentielle des deux faisceaux lumineux partiels est utilisée en tant que mesure de la vitesse de rotation, caractérisé en ce que:
- trois faisceaux lumineux partiels sont émis, qui sont chacun accordés en soi sur un mode de résonateur différent, l'un des faisceaux lumineux partiels étant dirigé sur le résonateur en sens contraire aux deux autres faisceaux lumineux partiels,
- les fréquences différentielles entre le premier et les deux autres faisceaux lumineux partiels sont formées, et

- les deux fréquences différentielles sont multipliées par des facteurs qui correspondent à la différence entre les nombres ordinaux des modes de résonateur respectifs, isolées l'une de l'autre et évaluées pour déterminer la vitesse de rotation.

2. Procédé selon la revendication 1, caractérisé en ce que pour déterminer la longueur optique du résonateur et de ce fait la température et le facteur scalaire de la mesure de la vitesse de rotation, les résultats de la différence sont ajoutés de façon pondérée.

3. Dispositif de mesure de la vitesse de rotation à l'aide d'un résonateur optique passif, dans lequel un faisceau lumineux provenant d'une source de lumière cohérente (1) est subdivisé en plusieurs faisceaux lumineux partiels qui sont dirigés sur un résonateur annulaire à fibres (6), qui est accordé de façon active sur la source de lumière et/ou auquel la source de lumière est accordée de façon active, et dans lequel l'un des faisceaux lumineux partiels est accordé sur la fréquence de résonance du résonateur (6) à l'aide d'un élément de décalage de fréquence (14; 20), et comprenant également un circuit d'évaluation électronique qui évalue la fréquence différentielle des faisceaux lumineux partiels qui tournent en sens contraire dans le résonateur annulaire (6) pour fournir la mesure de la vitesse de rotation, caractérisé par

- un dispositif diviseur de faisceau (4, 13; 20) qui subdivise le faisceau lumineux provenant de la source de lumière (1) en trois faisceaux lumineux partiels (2, 11, 12), dont l'un (2) est dirigé de façon inchangée par l'intermédiaire dun coupleur de lumière (5) dans une direction sur le résonateur annulaire (6), alors que les deux autres faisceaux lumineux partiels (11, 12) sont chacun accordés individuellement par un dispositif de décalage de fréquence régulé (14, 15; 20) sur un autre mode du résonateur annulaire (6) et sont dirigés en sens contraire sur le résonateur annulaire (6) par l'intermédiaire du coupleur de lumière (5);

- deux photodétecteurs (8, 16) dont l'un (8) reçoit par l'intermédiaire du coupleur de lumière (5) le faisceau lumineux partiel non modifié et pouvant être désaccouplé dans le résonateur annulaire (6), et dont l'autre reçoit les faisceaux lumineux partiels décalés en fréquence et pouvant être également désaccouplés dans le résonateur annulaire (6);

- un circuit de formation et de régulation de différence (17, 18) qui soustrait les signaux de sortie ($v_2$ ou $v_3$, $v_1$) des photodétecteurs et régule les fréquences, et par

- un circuit d'évaluation qui forme une différence entre les deux fréquences différentielles multipliées par des facteurs qui correspondent à la différence entre les nombres ordinaux des modes de résonateur respectifs et effectue une évaluation pour déterminer la vitesse de rotation.

4. Dispositif selon la revendication 3, caractérisé en ce que le résonateur annulaire (6) est constitué par un anneau de fibres monomodes conservant la polarisation et fortement biréfringeantes.

5. Dispositif selon la revendication 3, caractérisé en ce que le résonateur annulaire (6) est constitué par un anneau de fibres conductrices de lumière et polarisantes.

6. Dispositif selon la revendication 3, caractérisé en ce que le résonateur annulaire (6) est constitué par un anneau de fibres comprenant un polarisateur.

7. Dispositif selon la revendication 3, caractérisé en ce que le résonateur annulaire (6) est un résonateur formé par trois ou quatre miroirs.

8. Dispositif selon la revendication 3, caractérisé en ce que le résonateur annulaire (6), les modulateurs et les coupleurs sont montés dans un système optique intégré.

9. Dispositif selon l'une quelconque des revendications 3 à 8, caractérisé en ce que le dispositif de décalage de fréquence régulé est constitué par deux cellules de Bragg (14, 15).

10. Dispositif selon l'une quelconque des revendications 3 à 8, caractérisé en ce que le dispositif de décalage de fréquence régulé est un modulateur acoustique-optique comprenant deux excitateurs acoustiques.

11. Dispositif selon l'une quelconque des revendications 3 à 8, caractérisé en ce que le dispositif de décalage de fréquence régulée est constitué par une unique cellule de Bragg avec deux excitations de fréquence différentes.

12. Dispositif selon l'une quelconque des revendications 3 à 8, caractérisé en ce que le dispositif diviseur de faisceau et le dispositif de décalage de fréquence régulé sont constitués par un modulateur acoustique-optique fonctionnant dans la plage Raman-Nath.

13. Dispositif selon l'une quelconque des revendications 3 à 11, caractérisé en ce que les fréquences décalées peuvent être dirigées sur le résonateur alternativement et réciproquement par application de fréquences appropriées au dispositif de décalage de fréquence régulé.

14. Dispositif selon l'une quelconque des revendications 3 à 12, caractérisé en ce que les fréquences décalées peuvent être dirigées sur le résonateur alternativement et réciproquement par l'intermédiaire de diaphragmes (21, 22) pouvant être excités électromagnétiquement ou piézoélectriquement.

15. Dispositif selon l'une quelconque des revendications 3 à 12, caractérisé en ce que les fréquences décalées peuvent être dirigées de façon continue sur le résonateur, mais ensuite modulées de façon différente et à nouveau séparées après le photodétecteur (16) par un filtrage approprié.

FIG.1

Rechner

0 172 390

# FIG.2

0 172 390

# FIG.3

FIG. 4